# EUROPÄISCHE PATENTSCHRIFT

(11) **EP 4 534 457 B1**
(45) Veröffentlichungstag und Bekanntmachung des Hinweises auf die Patenterteilung: **01.04.2026**
(21) Anmeldenummer: 24201572.5
(22) Anmeldetag: 20.09.2024
(51) Int. Cl.: B25J 15/00, B25J 15/10, B29D 30/00, B60B 30/02, B65G 67/00, B65G 57/20, B25J 5/00, B25J 9/00, B60B 30/04

(54) **HANDHABUNGSSYSTEM FÜR DIE AUTOMATISIERTE ANORDNUNG VON FAHRZEUGREIFEN ZU EINER LAGERANORDNUNG**
HANDLING SYSTEM FOR THE AUTOMATED ASSEMBLY OF VEHICLE TYRES TO A BEARING ARRANGEMENT
SYSTÈME DE MANIPULATION POUR L'ASSEMBLAGE AUTOMATISÉ DE PNEUS DE VÉHICULE À UN ENSEMBLE PALIER

(30) Priorität: 04.10.2023 DE 102023209695
(43) Veröffentlichungstag der Anmeldung: 09.04.2025
(73) Patentinhaber: Continental Reifen Deutschland GmbH, 30175 Hannover (DE)
(72) Erfinder: Kornau, Rene, 30175 Hannover (DE); Charlin, Friedrich, 30175 Hannover (DE)
(74) Vertreter: Continental Corporation

(56) Entgegenhaltungen:
- WO-A1-2014/113511
- WO-A1-2020/156751
- CN-A- 109 079 839
- DE-A1- 102014 016 071
- DE-A1- 102022 126 014

## Beschreibung

Die Erfindung betrifft ein Handhabungssystem für die automatisierte Anordnung von Fahrzeugreifen zu einer Lageranordnung und ein Verfahren zur Anordnung von Fahrzeugreifen zu einer Lageranordnung in einem Lagerbereich mit einem solchen Handhabungssystem.

Nach der Herstellung von Fahrzeugreifen in einem Reifenwerk müssen diese zum Kunden gelangen. Die entsprechende Verteilung von hergestellten Fahrzeugreifen in die nachgelagerten Vertriebskanäle setzt in vielen Fällen eine ausgefeilte Logistik voraus, welche mit Blick auf die angestrebte Zeit- und Kosteneffizienz darauf ausgelegt ist, große Mengen an Fahrzeugreifen in möglichst kurzer Zeit und dabei -wenn möglich- "just in time" auszuliefern.

Zahlreiche der beim Transport und der späteren Verteilung anfallenden Arbeitsschritte werden heutzutage noch manuell ausgeführt, beispielsweise durch die in einem Lagerhaus eingesetzten Arbeitskräfte. Einer dieser Arbeitsschritte, welcher heutzutage noch zumeist manuell ausgeführt wird, ist die Verladung von Fahrzeugreifen in einen für den Transport vorgesehenen Lagerbereich, beispielsweise die Ladefläche eines Lkw oder einen Seecontainer. Die manuelle Überführung der beispielsweise von einem Förderband in der Nähe des zu beladenden Lagerbereichs bereitgestellten Fahrzeugreifen in den Lagerbereich ist für die eingesetzten Arbeitskräfte regelmäßig mit hohen körperlichen Belastungen verbunden. Die körperlich anstrengende Arbeit führt dabei in vielen Fällen zu Problemen bei der Personalbeschaffung und erhöhten Personalkosten, insbesondere weil eine größere Anzahl von Arbeitskräften eingesetzt werden muss, um das aus gesundheitstechnischen Gründen von jeder Arbeitskraft zu handhabende Maximalgewicht nicht zu überschreiten.

Um eine möglichst kosteneffiziente Beförderung zu ermöglichen, ist es bei der Beladung der für den Transport vorgesehenen Lagerbereiche zudem wünschenswert, dass die Fahrzeugreifen in einem effizienten Packmuster angeordnet werden, um im Lagerbereich durch eine optimierte Lageranordnung eine erhöhte Packungsdichte zu erzielen. Die manuelle Erstellung entsprechender vorteilhafter Lageranordnungen kann dabei in vielen Fällen in sehr hohen Beladezeiten, beispielsweise von zwei bis drei Stunden, resultieren, wodurch die insgesamt anfallenden Logistikkosten durch die erhöhten Standzeiten nachteilig beeinflusst werden. Zudem ist die manuelle Erstellung entsprechender Lageranordnungen insbesondere im Fall von nur unzureichend ausgebildeten Arbeitskräften fehleranfällig, wodurch Effizienzverluste auftreten können.

Informationen zum allgemeinen technologischen Hintergrund sind beispielsweise in der US 9 701 491 B2 und der EP 2 945 984 B1 offenbart.

Aus dem Stand der Technik sind prinzipiell Vorrichtungen und Verfahren bekannt, mit denen sich der Verladeprozess von Fahrzeugreifen zumindest teilweise automatisieren lässt. Eine entsprechende Offenbarung findet sich beispielsweise in der US 9 701 491 B2 oder in der gattungsgemässen WO2014/113511 A1. Viele der aus dem Stand der Technik bekannten Vorrichtungen werden jedoch hinsichtlich verschiedenster Aspekte in vielen Fällen als nachteilig empfunden, insbesondere was den Grad der Automatisierbarkeit und die Möglichkeit zur Umsetzung besonders effizienter Verfahrensführungen sowie hinsichtlich der Flexibilität der eingesetzten Vorrichtungen für unterschiedliche Anwendungsfälle betrifft.

Ein nachteiliger Effekt bei den aus dem Stand der Technik bekannten Lösungen, ist dabei, dass die gemäß Stand der Technik eingesetzten Endeffektoren hinsichtlich verschiedener Aspekte nachteilig sind. Insbesondere wurde für viele der im Stand der Technik vorgeschlagenen Endeffektoren gefunden, dass diese wegen ihrer konstruktiven Abmessungen, insbesondere der Aufbauhöhe in den wandungsnahen Randbereichen der zu befüllenden Lagerbereiche, beispielsweise im Bereich der Containerwandung, nicht oder nur unzureichend dazu geeignet sind, sehr dichte Reifenpackungen zu erzeugen.

Besonders schwer wiegt insoweit jedoch, dass die Erfinder gefunden haben, dass viele der aus dem Stand der Technik bekannten Lösungen zum Aufnehmen und Platzieren der Fahrzeugreifen mit einer starken mechanischen Belastung der aufgenommenen Fahrzeugreifen einhergehen. In vielen Fällen, in denen beispielsweise auf den Einsatz einfacher Greifelemente gesetzt wird, welche den Reifen in einem Teilbereich umfassen, führt die mechanische Belastung im Reifenbereich, welche naturgemäß auch auf die Außenseite des Fahrzeugreifens, d.h. den Laufstreifen, einwirkt, zu unerwünschten mechanischen Beschädigungen des Fahrzeugreifens. Diese Beschädigungen und Deformationen der Fahrzeugreifen treten dabei insbesondere dann auf, wenn die Fahrzeugreifen von der automatisierten Vorrichtung mit Kraft in eine verbleibende Lücke der Lageranordnung eingepresst werden. In diesem Zusammenhang wird von den Erfindern als besonders nachteilig empfunden, dass die aus dem Stand der Technik bekannten Lösungen zum Greifen der Fahrzeugreifen zumeist einen einseitigen Griff verwenden und somit bezogen auf den Umfang des Fahrzeugreifens zu einer ungleichmäßigen mechanischen Belastung des Reifenaufbaus führen, was im späteren Einsatz der Fahrzeugreifen zu einem asymmetrischen Defekt führen kann, welcher das Rollverhalten der Fahrzeugreifen besonders nachteilig beeinflusst.

Die primäre Aufgabe der vorliegenden Erfindung war es, die Nachteile des Standes der Technik auszuräumen oder zumindest zu verringern.

Insbesondere war es die Aufgabe der vorliegenden Erfindung, ein vorteilhaftes Handhabungssystem und ein darauf aufbauendes Verfahren zur Anordnung von Fahrzeugreifen zu einer Lageranordnung in einem Lagerbereich anzugeben, mit dem die im Rahmen des Logistikprozesses für Fahrzeugreifen anfallenden Arbeitsschritte in vorteilhafter Weise automatisiert werden können.

Hierbei war es eine Aufgabe der vorliegenden Erfindung, dass das anzugebende Handhabungssystem und das entsprechende Verfahren eine besonders zeit- und kosteneffiziente Handhabung von hergestellten Fahrzeugreifen ermöglichen sollte, wobei es insbesondere wünschenswert war, dass möglichst raumoptimierte Lageranordnungen von Fahrzeugreifen in möglichst kurzer Zeit herstellbar sein sollten.

Dabei war es eine Aufgabe der vorliegenden Erfindung, die Arbeitsbelastung für im Verfahren eingesetzte Arbeitskräfte möglichst zu reduzieren und die Prozesssicherheit der entsprechenden Logistikprozesse, insbesondere die Präzision hinsichtlich der Herstellung der Lageranordnungen, zu verbessern.

Es war eine wichtige Aufgabe der vorliegenden Erfindung, dass mit dem anzugebenden Handhabungssystem und dem entsprechenden Verfahren besonders vorteilhafte Lageranordnungen herstellbar sein sollten, welche insbesondere eine höhere Packungsdichte aufweisen sollten als in vergleichbaren Lageranordnungen, welche mit aus dem Stand der Technik bekannten automatisierten Systemen erhaltbar sind.

Es war eine besonders wichtige Aufgabe der vorliegenden Erfindung, dass das anzugebende Handhabungssystem und das darauf aufbauende Verfahren besonders reifenschonend sein sollten. Insbesondere war es wünschenswert, dass das anzugebende Handhabungssystem Fahrzeugreifen auch in enge Lücken einer Lageranordnung einbringen kann, ohne die Fahrzeugreifen in nennenswerter Weise zu beschädigen, wobei insbesondere eine asymmetrische mechanische Belastung der Fahrzeugreifen beim Packungsprozess vermieden werden sollte.

Die Erfinder der vorliegenden Erfindung haben nunmehr gefunden, dass sich die vorstehenden Aufgaben lösen lassen, wenn in einem Handhabungssystem mit einer angetriebenen Fahrzeugbasis, einem Fördersystem nebst Positioniereinrichtung, einer optischen Detektionseinheit, einer elektronischen Steuerungsvorrichtung und einer Überführungsvorrichtung mit einem Endeffektor, dieser Endeffektor so ausgeführt wird, dass dieser mittels einer expandierbaren Blockstruktur mit drei oder mehr beweglichen Blockelementen in einen zu handhabenden Fahrzeugluftreifen eingreifen und dadurch zu diesem eine reversibel und zerstörungsfrei lösbare Verbindung ausbilden kann, wie es in den Ansprüchen definiert ist.

Die vorstehend genannten Aufgaben werden somit durch den Gegenstand der Erfindung gelöst, wie er in den unabhängigen Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden. Merkmale bevorzugter Verfahren ergeben sich aus den Merkmalen bevorzugter Handhabungssysteme.

Die Erfindung betrifft insbesondere ein Handhabungssystem für die automatisierte Anordnung von Fahrzeugreifen zu einer Lageranordnung, umfassend eine Vielzahl an Fahrzeugreifen, insbesondere innerhalb eines Lagerbereichs, umfassend:
i) eine Fahrzeugbasis mit einem Antrieb und einem Fahrwerk,
ii) eine mit der Fahrzeugbasis verbundene Positioniereinrichtung zur Positionierung eines Fahrzeugreifens in einem Aufnahmebereich des Handhabungssystems,
iii) eine mit der Fahrzeugbasis verbundene Fördereinrichtung zur Förderung eines Fahrzeugreifens und Übergabe des Fahrzeugreifens an die Positioniereinrichtung,
iv) eine mit der Fahrzeugbasis verbundene Überführungseinrichtung zur Aufnahme eines Fahrzeugreifens aus dem Aufnahmebereich des Handhabungssystems und zur Anordnung des aufgenommenen Fahrzeugreifens in eine Lageranordnung, wobei die Überführungseinrichtung eine automatisierte Bewegungseinheit und einen an der automatisierten Bewegungseinheit angeordneten Endeffektor zur Aufnahme von Fahrzeugreifen umfasst,
v) eine, bevorzugt mit der Fahrzeugbasis verbundene, elektronische optische Detektionseinheit zur Detektion einer optischen Umgebungsinformation, und
vi) eine elektronische Steuerungsvorrichtung zur Steuerung des Handhabungssystems, wobei die elektronische Steuerungsvorrichtung dazu eingerichtet ist, die Fahrzeugbasis zumindest teilweise in Abhängigkeit von der detektierten optischen Umgebungsinformation zu bewegen,
wobei der Endeffektor eine Blockstruktur mit drei oder mehr beweglichen Blockelementen umfasst, welche reversibel und zerstörungsfrei derart veränderbar ist, dass für die Blockstruktur in unterschiedlichen Zuständen unterschiedliche Werte von A_{Block} erhalten werden, wobei A_{Block} die Fläche des kleinsten theoretischen Kreises ist, durch den die Blockstruktur mit einer axialen translatorischen Verschiebung noch vollständig hindurchgeführt werden kann.

Die Erfindung betrifft ein Handhabungssystem, welches dazu dient, Fahrzeugreifen automatisiert anzuordnen und zu einer Lageranordnung zusammenzustellen, in der diese besonders Platz sparend angeordnet werden können, beispielsweise in einem Lkw-Anhänger oder einem Seecontainer. Für die meisten Fälle bevorzugt ist ein erfindungsgemäßes Handhabungssystem, wobei die Fahrzeugreifen PKW- und/oder LKW-Reifen, bevorzugt LKW-Reifen, sind.

Die Grundlage für das erfindungsgemäße Handhabungssystem bildet eine Fahrzeugbasis, welche einen Antrieb und ein Fahrwerk umfasst und in Übereinstimmung mit der fachmännischen Erwartung darauf ausgelegt ist, die Bewegung des Handhabungssystems zu ermöglichen. Mit der Fahrzeugbasis kann das Handhabungssystem beispielsweise in einen Seecontainer verfahren werden, um dort die Anordnung der Reifen vorzunehmen. Für die meisten Fälle bevorzugt ist ein erfindungsgemäßes Handhabungssystem, wobei der Lagerbereich ein Container oder ein LKW-Anhänger, bevorzugt ein Container, ist.

Bei dem Antrieb der Fahrzeugbasis kann es sich zweckmäßigerweise um einen Elektroantrieb handeln. Insoweit erachten die Erfinder insbesondere den Einsatz von Servomotoren als besonders bevorzugt. Diese Servomotoren erlauben es, durch die präzise Einstellbarkeit und Nachvollziehbarkeit der Antriebsrotation aus den Ausgabedaten des Servomotors auf die Position der Fahrzeugbasis im Raum zu schließen, sofern die Ausgangsposition der Fahrzeugbasis bekannt war. Unter Einsatz dieses auch als Odometrie bezeichneten Konzepts kann dadurch in vorteilhafter Weise auf sonstige Verfahren und Vorrichtungen, welche der Positionsbestimmung des Handhabungssystems im Raum dienen, verzichtet werden. Zudem ist es für eine Steuerungssoftware, welche den Betrieb des Handhabungssystems steuert, in vorteilhafter Weise möglich, umgekehrt besonders präzise Bewegungsinstruktionen an die Servomotoren der Fahrzeugbasis weiterzugeben und damit gezielt und präzise Positionsveränderungen des Handhabungssystems zu bewirken, mit welcher eine besonders hohe Packungspräzision erreicht werden kann. Bevorzugt ist ein erfindungsgemäßes Handhabungssystem, wobei die Fahrzeugbasis einen Elektroantrieb umfasst. Bevorzugt ist überdies ein erfindungsgemäßes Handhabungssystem, wobei die Fahrzeugbasis zumindest einen Servomotor umfasst. Bevorzugt ist außerdem ein erfindungsgemäßes Handhabungssystem, wobei die die elektronische Steuerungsvorrichtung dazu eingerichtet ist, die Position der Fahrzeugbasis relativ zu einer in Abhängigkeit von der detektierten Bildinformation bestimmten Ausgangsposition ausgehend von den Steuerungsparametern des oder der Servomotoren mittels Odometrie zu ermitteln, und/oder wobei die elektronische Steuerungsvorrichtung dazu eingerichtet ist, das Handhabungssystem teilweise in Abhängigkeit von den Steuerungsparametern des oder der Servomotoren zu steuern.

Die Erfinder schlagen vor, dass besonders vorteilhafte Handhabungssysteme dadurch erhalten werden können, dass die eingesetzte Fahrzeugbasis mit einer hohen Mobilität und Beweglichkeit ausgeführt wird. Dies ist insbesondere deshalb vorteilhaft, weil es für bestimmte Anwendungen anstrebenswert ist, nicht nur eine translatorische Bewegung nach vorne und hinten, d.h. beispielsweise hinein oder hinaus aus einem Seecontainer, vorzunehmen, sondern stattdessen auch eine laterale Bewegung der Fahrzeugbasis, d.h. parallel zur Containerrückwand, vornehmen zu können. Hierdurch ist es in vorteilhafter Weise möglich, mit geringeren Wegstrecken der automatisierten Bewegungseinheit auch breitere Lageranordnungen herzustellen, indem die Fahrzeugbasis beispielsweise im Seecontainer von links nach rechts bewegt wird. Zum Zwecke einer möglichst hohen Energieeffizienz sowie einer schnellen Umsetzung der notwendigen Bewegung schlagen die Erfinder vor, dass die Fahrzeugbasis so ausgelegt werden sollte, dass sie entsprechende seitliche Bewegungen möglichst unmittelbar umsetzen kann, wobei neben einer möglichst lokalen Rotierbarkeit insbesondere auch eine Ausgestaltung als vorteilhaft erachtet wird, in der -beispielsweise über die Wahl spezifisch strukturierter Fahrzeugreifen- auch eine Querbeweglichkeit vorgesehen wird, welche ohne eine Neuausrichtung der Längsachse auskommt. Bevorzugt ist ein erfindungsgemäßes Handhabungssystem, wobei das Fahrwerk der Fahrzeugbasis dazu eingerichtet ist, dass die Fahrzeugbasis einen Wendekreis von 30 cm oder weniger, bevorzugt 20 cm oder weniger, besonders bevorzugt 10 cm oder weniger, aufweist, wobei das Fahrwerk der Fahrzeugbasis insbesondere dazu eingerichtet ist, dass die Fahrzeugbasis im Wesentlichen auf der Stelle rotierbar ist. Bevorzugt ist alternativ oder zusätzlich ein erfindungsgemäßes Handhabungssystem, wobei das Fahrwerk der Fahrzeugbasis dazu eingerichtet ist, dass die Fahrzeugbasis entweder entlang der Längsachse oder entlang der orthogonal zur Längsachse stehenden Querachse bewegt werden kann, ohne dass sich die Ausrichtung der Längsachse um 5° oder mehr ändert.

Die Fahrzeugbasis ist mit einer Fördereinrichtung verbunden, welche der Förderung eines Fahrzeugreifens dient und mit der beispielsweise die Fahrzeugreifen aus einem hinteren Lagerbereich zu dem Handhabungssystem geführt werden können, welches die Fahrzeugreifen in die Lageranordnung einsetzt. Bei der Fördereinrichtung kann es sich bevorzugt um ein beispielsweise elektrisch angetriebenes Förderband handeln, welches sich zum Zwecke der einfachen Handhabung als reversibel und zerstörungsfrei mit dem restlichen Handhabungssystem verbindbares Förderelement ausführen lässt. Hierbei erachten die Erfinder insbesondere die Ausführung als Fördereinrichtung, deren Länge reversibel und zerstörungsfrei änderbar ist, beispielsweise durch Ausgestaltung als Teleskopförderband, als bevorzugt. Insbesondere bei der Kombination einer längenveränderlichen Fördereinrichtung mit einer reversibel und zerstörungsfreien Anbindbarkeit an die sonstigen Teile des Handhabungssystems, lassen sich die auf der Fahrzeugbasis angeordneten Teile des Handhabungssystems besonders effizient mit unterschiedlichen Zuführvorrichtungen kombinieren, beispielsweise indem die unterschiedlichen Fördereinrichtungen, welche beispielsweise unterschiedlichen Reifenfertigungslinien zugeordnet werden können, individuell mit der Fahrzeugbasis verknüpft werden können, um die entsprechenden Reifen zu packen. Bevorzugt ist ein erfindungsgemäßes Handhabungssystem, wobei die Fördereinrichtung reversibel und zerstörungsfrei lösbar mit der Fahrzeugbasis verbunden ist. Bevorzugt ist zusätzlich oder alternativ ein erfindungsgemäßes Handhabungssystem, wobei die Fördereinrichtung ein angetriebenes Förderband umfasst. Bevorzugt ist zusätzlich oder alternativ ein erfindungsgemäßes Handhabungssystem, wobei die Fördereinrichtung abschnittsweise als reversibel und zerstörungsfrei ausfahrbare Fördereinrichtung ausgeführt ist.

Von der Fördereinrichtung wird ein geförderter Fahrzeugreifen an die Positioniereinrichtung weitergegeben, welche auf der Fahrzeugbasis angeordnet ist und der internen Förderung sowie der Positionierung des Fahrzeugreifens im Handhabungssystem dient. Insbesondere dient die Positionierungseinrichtung dem Zweck, die von der Fördereinrichtung übernommenen Fahrzeugreifen in Richtung des Aufnahmebereichs zu fördern und dort präzise und reproduzierbar anzuordnen, damit die Fahrzeugreifen im Aufnahmebereich durch die Überführungseinrichtung aufgenommen werden können. Bevorzugt ist ein erfindungsgemäßes Handhabungssystem, wobei die Positioniereinrichtung ein oder mehrere Führungselemente umfasst, wobei die Führungselemente dazu eingerichtet sind, einen in der Positioniereinrichtung geführten Fahrzeugreifen in den Aufnahmebereich zu führen. Bevorzugt ist außerdem ein erfindungsgemäßes Handhabungssystem, wobei die Positioniereinrichtung auf der Oberseite der Fahrzeugbasis angeordnet ist.

Für eine effiziente Weiterförderung der Reifen in der Positioniereinrichtung schlagen die Erfinder vor, dass diese zumindest teilweise als angetriebene Positioniereinrichtung ausgeführt werden sollte, die eine aktive Förderung der Reifen ermöglicht. Als besonders bevorzugte Ausführungsform haben die Erfinder jedoch identifiziert, dass ein Teil der Positioniereinrichtung in vorteilhafter Weise auch als nicht angetriebener Schwerkraft-Rollenförderer ausgeführt werden kann. Hierdurch werden die geförderten Fahrzeugreifen teilweise über einen abschüssigen Bereich geführt, welcher im Rahmen der vorliegenden Erfindung als Freiförderabschnitt bezeichnet wird, da in diesem die Förderung zumindest anteilig durch die Schwerkraft bewirkt beziehungsweise befördert wird. Bevorzugt ist ein erfindungsgemäßes Handhabungssystem, wobei die Positioniereinrichtung ein angetriebenes Förderband und/oder angetriebene Förderrollen umfasst. Bevorzugt ist zusätzlich oder alternativ ein erfindungsgemäßes Handhabungssystem, wobei die Positioniereinrichtung einen in Richtung des Aufnahmebereichs abschüssigen Freiförderabschnitt umfasst, wobei der Freiförderabschnitt eine Vielzahl von frei rotierbar gelagerten Rollenelementen umfasst, wobei der Freiförderabschnitt dazu eingerichtet ist, einen Fahrzeugreifen zumindest teilweise durch Einwirkung der Schwerkraft in Richtung des Aufnahmebereichs zu führen.

In einer vorteilhaften Ausführungsform kann der Aufnahmebereich, d.h. der Bereich, in dem der Fahrzeugreifen vorpositioniert wird, um von der Überführungseinrichtung aufgenommen zu werden, höhenverstellbar ausgeführt werden. Dies hat den Vorteil, dass die von der Überführungseinrichtung zurückzulegenden Wegstrecken zwischen dem zu befüllenden Platz in der Lageranordnung und dem Aufnahmebereich, in welchem der jeweils nächste Fahrzeugreifen bereitgestellt wird, minimiert werden kann. Bevorzugt ist ein erfindungsgemäßes Handhabungssystem, wobei die Positioniereinrichtung im Aufnahmebereich höhenverstellbar ausgebildet ist.

Die tatsächliche Überführung der Fahrzeugreifen von dem Handhabungssystem in die Lageranordnung erfolgt durch eine Überführungseinrichtung, welche den Fahrzeugreifen im Bereich des Aufnahmebereichs aufnimmt und in die Lageranordnung einsetzt. Zu diesem Zweck besteht die Überführungseinrichtung aus zumindest zwei Elementen, nämlich dem für die Aufnahme des Fahrzeugreifens vorgesehenen Element, d.h. dem Endeffektor, sowie der Bewegungseinheit, mit der der Endeffektor und ein vom Endeffektor aufgenommener Fahrzeugreifen im Raum bewegt werden kann. Auch wenn es prinzipiell denkbar ist, als Überführungseinrichtung alternative Lösungen vorzusehen, beispielsweise Linearachsensysteme mit entsprechenden Endeffektoren, erachten es die Erfinder für im Wesentlichen alle Ausführungsformen als besonders bevorzugt, wenn ein Industrieroboter eingesetzt wird, bei dem der Endeffektor an einem Roboterarm angeordnet ist. Bevorzugt ist ein erfindungsgemäßes Handhabungssystem, wobei die automatisierte Bewegungseinheit ein Roboterarm ist.

Ein wesentlicher Aspekt der vorliegenden Erfindung ist darin zu sehen, dass der Endeffektor in spezifischer Weise ausgeführt ist, wodurch vorteilhafterweise geringe strukturelle Limitationen, insbesondere durch eine niedrige Bauhöhe, sowie eine besonders schonende Aufnahme der zu platzierenden Fahrzeugreifen ermöglicht wird. Erfindungsgemäß umfasst der Endeffektor nämlich eine Struktur aus mehreren Elementen, die im Rahmen der vorliegenden Erfindung als Blockstruktur bezeichnet wird. Der Ausdruck Blockstruktur trägt dabei dem Umstand Rechnung, dass diese reversibel und zerstörungsfrei veränderbare Struktur derart expandiert werden kann, dass sie ein freies Herausziehen der Struktur aus dem Inneren eines Fahrzeugreifens blockiert. Zu diesem Zweck umfasst die Blockstruktur zumindest drei bewegliche Blockelemente, die hinsichtlich ihrer Struktur und/oder Ausrichtung veränderlich sind. Die erfindungsgemäß vorzusehende Blockstruktur des Endeffektors ist dafür vorgesehen, in einem Zustand, durch die zentrale Ausnehmung des Fahrzeugreifens in das Innere des Fahrzeugreifens hineingeführt zu werden, um dort derart expandiert zu werden, dass ein Herausziehen der Blockstruktur aus dem Fahrzeugreifen nicht mehr möglich ist, da die Blockstruktur diesem entgegensteht.

Der Fachmann versteht insoweit, dass die vom Handhabungssystem gehandhabten Fahrzeugreifen nicht Teil des erfindungsgemäßen Handhabungssystems sind. Um dennoch eine saubere Definition der erfindungsgemäß einzusetzenden Endeffektoren zu ermöglichen, wird die gewünschte Funktionalität über den Wert A_{Block} der Blockstruktur ausgedrückt. Dieses A_{Block} ist die Fläche des Kreises, durch den die entsprechende Blockstruktur mit einer axialen translatorischen Verschiebung theoretisch hindurchgeführt werden kann. Mit anderen Worten umfasst der Endeffektor eine Blockstruktur, die in einem ersten Zustand durch einen kleinen theoretischen Kreis geführt werden kann, welcher zweckmäßigerweise kleiner ist als die Öffnung des zu handhabenden Fahrzeugreifens, während die Blockstruktur nach Expansion in einem zweiten Zustand einen größeren theoretischen Blockierquerschnitt aufweist, der verhindert, dass die Blockstruktur aus dem aufzunehmenden Reifen herausgezogen werden kann. Bevorzugt ist ein erfindungsgemäßes Handhabungssystem, wobei der Endeffektor reversibel und zerstörungsfrei zwischen einer Fixieranordnung und einer Löseanordnung verstellt werden kann. Bevorzugt ist zusätzlich oder alternativ ein erfindungsgemäßes Handhabungssystem, wobei die Blockelemente als Blockstruktur eine reversibel und zerstörungsfrei aufspreizbare Spreizanordnung bilden. Bevorzugt ist zusätzlich oder alternativ ein erfindungsgemäßes Handhabungssystem, wobei die Blockstruktur so ausgelegt ist, dass der kleinste einstellbare Wert A_{Block} der Blockstruktur kleiner ist als die Kreisfläche der Zentralausnehmung eines vorbestimmten Fahrzeugreifentyps, und dass der größte einstellbare Wert A_{Block} der Blockstruktur größer ist als die Kreisfläche der Zentralausnehmung eines vorbestimmten Fahrzeugreifentyps.

In vorteilhafter Weise wird mit diesem Konzept ein Endeffektor erhalten, mit dem Fahrzeugreifen in besonders schonender Weise, insbesondere weitgehend frei von mechanischer Belastung, effizient in einer Lageranordnung angeordnet werden können.

In den Experimenten der Erfinder hat sich gezeigt, dass eine besonders zuverlässige Aufnahme, eine präzise und kontrollierte Führung des aufgenommenen Fahrzeugreifens sowie eine schonende Handhabung dadurch begünstigt werden können, dass eine größere Zahl an Blockelementen eingesetzt wird, welche idealerweise auch noch möglichst gleichmäßig über den Umfang des später aufzunehmenden Fahrzeugreifens verteilt werden sollten, was beispielsweise durch die Einstellung einer hinreichenden Rotationssymmetrie erreicht werden kann und insbesondere verhindert, dass es zu einer unsymmetrischen mechanischen Belastung der Fahrzeugreifen im Packungsprozess kommt. Bevorzugt ist ein erfindungsgemäßes Handhabungssystem, wobei die Blockstruktur rotationssymmetrisch ist, bevorzugt mit einer Rotationssymmetrie von C₃ oder mehr, besonders bevorzugt mit einer Rotationssymmetrie von Cₙ, wobei n die Zahl der Blockelemente ist. Bevorzugt ist zusätzlich oder alternativ ein erfindungsgemäßes Handhabungssystem, wobei der Endeffektor zumindest vier, bevorzugt zumindest fünf, besonders bevorzugt zumindest sechs, Blockelemente umfasst.

Die Erfinder erachten es als besonders vorteilhaft, im Endeffektor eine Grundstruktur vorzusehen, an der die Blockstruktur beziehungsweise die Blockelemente angeordnet werden können. Der Vorteil dieser Grundstruktur kann darin gesehen werden, dass diese nach Expansion der Blockelemente im Inneren des Reifens gegen die Reifenflanke drückt und eine Stabilisierung des Fahrzeugreifens ermöglicht sowie einen Kraftschluss befördert, durch den die Fahrzeugreifen in vorteilhafter Weise auch im Wesentlichen vertikal gehandhabt werden können. Mit Blick auf eine möglichst effiziente Anordnung der Fahrzeugreifen in der Lageranordnung schlagen die Erfinder jedoch vor, dass die entsprechende Grundstruktur mit möglichst niedriger Bauhöhe, beispielsweise als flächige Grundstruktur ausgeführt werden sollte. In vorteilhafter Weise kann hierbei auf eine Rahmenstruktur gesetzt werden, sodass die Blockelemente zumindest teilweise in der Grundstruktur beziehungsweise relativ zur Grundstruktur versenkt werden können, sodass die Grundstruktur flach über den Reifen geführt werden kann, ohne dass die Blockstruktur dieser Bewegung übermäßig Widerstand entgegenbringt. Bevorzugt ist ein erfindungsgemäßes Handhabungssystem, wobei der Endeffektor eine Grundstruktur umfasst, wobei die Blockstruktur an der Grundstruktur angeordnet ist. Bevorzugt ist überdies ein erfindungsgemäßes Handhabungssystem, wobei die Grundstruktur eine flächige Grundstruktur, bevorzugt eine flächige Rahmenstruktur ist. Bevorzugt ist zusätzlich oder alternativ ein erfindungsgemäßes Handhabungssystem, wobei die Blockelemente in der Löseanordnung in der Grundstruktur versenkt angeordnet sind. Bevorzugt ist zusätzlich oder alternativ ein erfindungsgemäßes Handhabungssystem, wobei der Endeffektor dazu eingerichtet ist, dass die Grundstruktur in der Löseanordnung einen aufzunehmenden Fahrzeugreifen aus der axialen Richtung kontaktieren kann, bevorzugt an entlang der radialen Richtung gegenüberliegenden Seiten der Zentralausnehmung des Reifens, bevorzugt ohne dass die Blockstruktur den Fahrzeugreifen kontaktieren, wobei die Blockstruktur bevorzugt in die Zentralausnehmung reicht und/oder in der Grundstruktur versenkt ist.

Bevorzugt ist auch ein erfindungsgemäßes Handhabungssystem, wobei der Endeffektor dazu eingerichtet ist, dass der Endeffektor eine Verbindung zu einem aufzunehmenden Fahrzeugreifen ausbilden kann, bei der die Grundstruktur in axialer Richtung oberhalb des Fahrzeugreifens angeordnet ist und bei der die Blockstruktur in das Innere des Fahrzeugreifens ragt.

Bevorzugt ist in anderen Worten auch ein erfindungsgemäßes Handhabungssystem, wobei der Endeffektor dazu eingerichtet ist, zu einem aufzunehmenden Fahrzeugreifen mit der Blockstruktur an drei oder mehr, bevorzugt vier oder mehr, über den Umfang des Fahrzeugreifens verteilten Kontaktpunkten eine kraftschlüssige Verbindung auszubilden, bevorzugt durch Kontaktieren der Reifeninnenschicht oder der Reifenwülste, bevorzugt der Reifenwülste. Bevorzugt ist zudem ein erfindungsgemäßes Handhabungssystem, wobei zumindest ein Kontaktpunkt zu zumindest zwei weiteren Kontaktpunkten einen Winkelabstand von 90° oder mehr, bevorzugt von 110° oder mehr, aufweist.

Bevorzugt ist ein in anderen Worten zusätzlich oder alternativ auch erfindungsgemäßes Handhabungssystem, wobei der Endeffektor dazu eingerichtet ist, zu einem aufzunehmenden Fahrzeugreifen dadurch eine Verbindung auszubilden, dass ausgehend von einem in axialer Richtung oberhalb des Fahrzeugreifen angeordneten Grundkörpers die Blockstruktur expandiert wird, bevorzugt in die radiale Richtung und/oder die axiale Richtung, besonders bevorzugt die radiale Richtung und die axiale Richtung, bevorzugt durch Verschwenken der Blockelemente, so dass sich A_{Block} erhöht.

Es kann als großer Vorteil der erfindungsgemäßen Handhabungssysteme gesehen werden, dass diese infolge des spezifischen eingesetzten Endeffektors zu einer deutlich geringeren mechanischen Belastung der gehandhabten Fahrzeugreifen führen, als es beispielsweise beim Einsatz von Greifkrallen oder vergleichbaren Vorrichtungen der Fall ist. Der Fachmann versteht insoweit, dass es auch besonders bevorzugt ist, möglichst weitgehend auf den Einsatz entsprechender Greifkrallen zu verzichten. Bevorzugt ist ein erfindungsgemäßes Handhabungssystem, wobei der Endeffektor keine Greifkrallen umfasst.

Das erfindungsgemäße Handhabungssystem umfasst eine optische Detektionseinheit, welche insbesondere dem Zweck dient, eine optische Umgebungsinformation zu erfassen, aus der zumindest eine Information über die Position der Fahrzeugbasis im Raum herleitbar ist. Die optische Detektionseinheit kann dabei prinzipiell als Teil des Handhabungssystems auch separat zur Fahrzeugbasis angeordnet werden, beispielsweise indem sie den Raum überwacht, in dem die Fahrzeugbasis operiert. Für im Wesentlichen alle Ausführungsformen bevorzugt ist es jedoch, wenn die optische Detektionseinheit an der Fahrzeugbasis befestigt wird. Hierdurch ist es in vorteilhafter Weise möglich, die elektronische optische Detektionseinheit zusammen mit der Fahrzeugbasis in einen zu befüllenden Raum zu verfahren und im Inneren weitere Umgebungsinformationen zu sammeln. Insbesondere beim Einsatz von LIDAR-Sensoren oder Methoden zur Erfassung dreidimensionaler Bilder kann die Ausgabe der optischen Detektionseinheit verwendet werden, um die Anordnung der Fahrzeugreifen in die gewünschte Lageranordnung zu begünstigen. Bevorzugt ist ein erfindungsgemäßes Handhabungssystem, wobei die optische Detektionseinheit eine Kamera oder einen LIDAR-Sensor umfasst, bevorzugt einen LIDAR-Sensor. Bevorzugt ist zusätzlich oder alternativ ein erfindungsgemäßes Handhabungssystem, wobei die optische Detektionseinheit einen optischen Abstandssensor umfasst.

Das erfindungsgemäße Handhabungssystem umfasst auch eine elektronische Steuerungsvorrichtung, welche der Steuerung des Handhabungssystems dient und insbesondere die Bewegung der Fahrzeugbasis auf Grundlage der von der elektronischen optischen Detektionseinheit gesammelten Umgebungsinformationen steuert. Die elektronische Steuerungsvorrichtung kann als Bestandteil des Handhabungssystems dabei separat von der Fahrzeugbasis gehalten werden, beispielsweise als Kontrollstand, wobei es aber auch denkbar ist, die elektronische Steuerungsvorrichtung teilweise oder vollständig in die beweglichen Teile des Handhabungssystems zu integrieren. Bevorzugt ist ein erfindungsgemäßes Handhabungssystem, wobei die elektronische Steuerungsvorrichtung an der Fahrzeugbasis angeordnet ist, oder wobei die elektronische Steuerungsvorrichtung als von der Fahrzeugbasis separate Steuerungsvorrichtung ausgebildet ist.

Bevorzugt ist ein erfindungsgemäßes Handhabungssystem, wobei die elektronische Steuerungsvorrichtung dazu eingerichtet ist, das Handhabungssystem in Abhängigkeit des gehandhabten Fahrzeugreifentyps zu steuern.

Bevorzugt ist auch ein erfindungsgemäßes Handhabungssystem, wobei die elektronische Steuerungsvorrichtung eine Eingabeschnittstelle zur manuellen Festlegung des gehandhabten Fahrzeugreifentyps umfasst, bevorzugt ein Display.

Bevorzugt ist zusätzlich oder alternativ ein erfindungsgemäßes Handhabungssystem, wobei das Handhabungssystem eine elektronische Identifikationseinheit zur Identifikation des gehandhabten Fahrzeugreifens umfasst. Bevorzugt ist zudem ein erfindungsgemäßes Handhabungssystem, wobei die elektronische Identifikationseinheit eine Bilderfassungseinheit zur Aufnahme eines Bildes des Fahrzeugreifens und einer Recheneinheit umfasst, wobei die Recheneinheit dazu eingerichtet ist, aus dem Bild des Fahrzeugreifens den gehandhabten Fahrzeugreifentyp zu bestimmen, bevorzugt durch Auslesen einer Kennzeichnung und/oder mittels auf künstlicher Intelligenz basierender Bilderkennung. Bevorzugt ist zusätzlich oder alternativ ein erfindungsgemäßes Handhabungssystem, wobei die elektronische Identifikationseinheit ein RFID-Leser zum Auslesen eines im Fahrzeugreifen vorliegenden RFID-Chips ist.

Bevorzugt ist zudem auch ein erfindungsgemäßes Handhabungssystem, wobei die elektronische Steuerungsvorrichtung eine Eingabeschnittstelle zur manuellen Festlegung der Lageranordnung umfasst, bevorzugt durch Auswahl einer von mehreren vorgegebenen Lageranordnungen, besonders bevorzugt Fahrzeugreifentyp-spezifischen Lageranordnungen, wobei die elektronische Steuerungsvorrichtung dazu eingerichtet ist, das Handhabungssystem derart zu steuern, dass die Fahrzeugreifen in der ausgewählten Lageranordnung angeordnet werden. Bevorzugt ist zusätzlich ein erfindungsgemäßes Handhabungssystem, wobei die Eingabeschnittstelle ein Display ist.

Bevorzugt ist ein erfindungsgemäßes Handhabungssystem, wobei die elektronische Steuerungsvorrichtung dazu eingerichtet ist, aus der detektierten optischen Umgebungsinformation einen Arbeitspfad zu errechnen, der sämtliche Arbeitsanweisungen und Bewegungsinformationen für die Anordnung einer vorgegebenen Zahl an Fahrzeugreifen in einer ausgewählten Lageranordnung umfasst, wobei die vorgegebenen Zahl an Fahrzeugreifen bevorzugt zwei oder mehr, besonders bevorzugt vier oder mehr, ganz besonders bevorzugt acht oder mehr, beträgt.

Die Erfindung betrifft auch ein Verfahren zur Anordnung von Fahrzeugreifen zu einer Lageranordnung in einem Lagerbereich mit einem erfindungsgemäßen Handhabungssystem, umfassend die Verfahrensschritte:
a) Bewegen der Fahrzeugbasis in eine Positionierungsposition, wobei das Bewegen zumindest teilweise in Abhängigkeit von der von der optischen Detektionseinheit detektierten optischen Umgebungsinformation erfolgt,
b) Fördern eines Fahrzeugreifens mit der Fördereinrichtung und Übergabe des geförderten Fahrzeugreifens an die Positioniereinrichtung,
c) positionieren des geförderten Fahrzeugreifens im Aufnahmebereich des Handhabungssystems mit der Positioniereinrichtung,
d) Aufnahme des Fahrzeugreifens aus dem Aufnahmebereich des Handhabungssystems mit dem Endeffektor der Überführungseinrichtung unter Ausbildung einer reversibel und zerstörungsfrei lösbaren Verbindung, und
e) Anordnen des aufgenommenen Fahrzeugreifens in einen Lagerbereich und Auflösen der Verbindung zwischen dem Endeffektor und dem Fahrzeugreifen,
wobei zumindest die Verfahrensschritte b), c), d) und e) mehrfach wiederholt werden, um im Lagerbereich eine Lageranordnung zu erzeugen.

Bevorzugte Verfahren nutzen die Vorteile bevorzugter Handhabungssysteme.

Bevorzugt ist somit zunächst ein erfindungsgemäßes Verfahren, wobei der Endeffektor in Verfahrensschritt d) in axialer Richtung oberhalb des Fahrzeugreifens positioniert wird, bevorzugt mit der Grundstruktur, wobei die Blockstruktur des Endeffektors zum Ausbilden der reversibel und zerstörungsfrei lösbaren Verbindung, bevorzugt zu einer Reifenwulst des Fahrzeugreifen, derart expandiert wird, dass die Blockstruktur mit dem Fahrzeugreifen an drei oder mehr Kontaktpunkten eine kraftschlüssige Verbindung ausbildet, wobei die Blockstruktur bevorzugt teilweise in das Innere des Fahrzeugreifens hineinragt.

Bevorzugt ist zusätzlich oder alternativ auch ein erfindungsgemäßes Verfahren, wobei der Endeffektor den Fahrzeugreifen in Verfahrensschritt d) nicht im Bereich des Laufstreifens und/oder nicht im Bereich der Seitenwand, bevorzugt weder im Bereich des Laufstreifens noch im Bereich der Seitenwand kontaktiert.

Bevorzugt ist zusätzlich oder alternativ zudem ein erfindungsgemäßes Verfahren, wobei das Auflösen der Verbindung zwischen dem Endeffektor und dem Fahrzeugreifen durch Verkleinern der Blockstruktur und Auflösen der kraftschlüssigen Verbindung erfolgt.

Bevorzugt ist zusätzlich oder alternativ ebenfalls ein erfindungsgemäßes Verfahren, wobei der Fahrzeugreifen vor Verfahrensschritt b) durch eine automatisierte Bereitstellungsvorrichtung oder manuell, bevorzugt durch eine automatisierte Bereitstellungsvorrichtung auf die Fördereinrichtung aufgebracht wird.

Bevorzugt ist zusätzlich oder alternativ darüber hinaus ein erfindungsgemäßes Verfahren, wobei die Fahrzeugreifen der Lageranordnung identisch sind.

Mit dem erfindungsgemäßen Verfahren ist es in vorteilhafter Weise möglich, eine besonders raumeffiziente Rick-Rack-Anordnung einzustellen, bei der im Vergleich zu herkömmlichen Rick-Rack-Anordnungen in den Randbereichen der jeweiligen Reihen zusätzlich vertikal angeordnete Fahrzeugreifen eingesetzt werden, was mit den aus dem Stand der Technik bekannten automatisierten Vorrichtungen zumeist nicht möglichst ist. Bevorzugt ist ein erfindungsgemäßes Verfahren, wobei die Lageranordnung eine Rick-Rack-Anordnung umfasst, bei der jeder Fahrzeugreifen in die Zentralausnehmung zumindest eines anderen Fahrzeugreifens der Lageranordnung hineinragt. Bevorzugt ist zusätzlich oder alternativ ein erfindungsgemäßes Verfahren, wobei die Lageranordnung bevorzugt eine Rick-Rack-Anordnung mit zumindest einem, bevorzugt mehreren, vertikal angeordneten Fahrzeugreifen umfasst, deren Rotationsachse mit der Horizontalen einen Winkel von 5° oder weniger, bevorzugt 2° oder weniger, besonders bevorzugt 1° oder weniger, einschließt.

Weitere Informationen zum erfindungsgemäßen Verfahren ergeben sich aus den vorstehenden Ausführungen zu dem erfindungsgemäßen Handhabungssystem sowie den nachfolgenden Ausführungen zu den beigefügten Figuren.

Nachfolgend werden die Erfindung und bevorzugte Ausführungsformen der Erfindung unter Bezugnahme auf die beiliegenden Figuren näher erläutert und beschrieben. Dabei zeigen:
- Fig. 1: eine bevorzugte erfindungsgemäße Handhabungsvorrichtung bei der Ausführung des erfindungsgemäßen Verfahrens in einer bevorzugten Ausführungsform;
- Fig. 2: eine beispielhafte Lageranordnung einer Vielzahl von Fahrzeugreifen, welche mittels des erfindungsgemäßen Verfahrens hergestellt ist; und
- Fig. 3: schematische Darstellungen eines erfindungsgemäß einzusetzenden Endeffektors in einer bevorzugten Ausführungsform in verschiedenen Ansichten und Expansionszuständen.

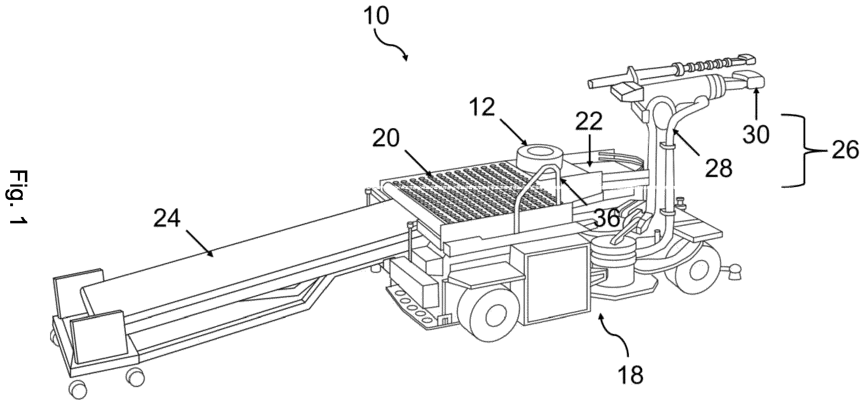

Fig. 1 zeigt ein erfindungsgemäßes Handhabungssystem 10 in einer bevorzugten Ausführungsform bei der Durchführung des erfindungsgemäßen Verfahrens zur automatisierten Anordnung von Fahrzeugreifen 12 zu einer Lageranordnung 14, welche eine Vielzahl an Fahrzeugreifen 12 umfasst, um diese möglichst raumoptimiert in einem Lagerbereich 16 zu verstauen. Das erfindungsgemäße Handhabungssystem 10 umfasst eine Fahrzeugbasis 18, welche vier mit Servomotoren angetriebene Räder umfasst, welche dazu eingerichtet sind, dass die Fahrzeugbasis 18 im Wesentlichen ohne Rotation auch quer zur Längsrichtung bewegt werden kann. Auf der Fahrzeugbasis 18 ist eine Positioniereinrichtung 20 vorgesehen, welche teilweise aus einem aktiven Förderbereich besteht, in welchem angetriebene Förderrollen die Fahrzeugreifen 12 transportieren und dabei mittels eines Führungselements in Richtung des Freiförderabschnitts 36 bewegen, welcher leicht angeschrägt ist und eine Förderung des Fahrzeugreifens 12 mittels der Schwerkraft ermöglicht.

Der Freiförderabschnitt 36 befördert den Fahrzeugreifen 12 in den Aufnahmebereich 22, wo dieser mit einer gitterförmigen Haltestruktur fixiert wird. Als Überführungseinrichtung 26 umfasst das gezeigte Handhabungssystem 10 der Fig. 1 eine automatisierte Bewegungseinheit, welche als Roboterarm ausgeführt ist und an deren Ende ein Endeffektor 30 angeordnet ist, mit dem die Fahrzeugreifen 12 aus dem Aufnahmebereich 22 aufgenommen werden können.

Die zu handhabenden Fahrzeugreifen 12 werden der Positioniereinrichtung 20 über eine Fördereinrichtung 24 bereitgestellt, welche reversibel und zerstörungsfrei lösbar mit der Fahrzeugbasis 18 verbunden werden kann. An der von der Fördereinrichtung 24 abgewandten Front der Fahrzeugbasis 18 ist im gezeigten Beispiel der Fig. 1 ein LIDAR-Sensor angeordnet, mit dem das erfindungsgemäße Handhabungssystem 10 optische Umgebungsinformationen sammeln kann.

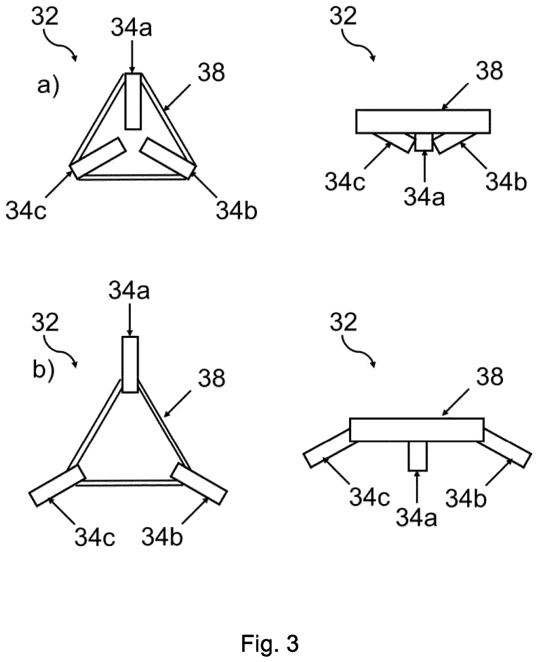

Das Handhabungssystem 10 umfasst darüber hinaus eine elektronische Steuerungsvorrichtung, welche als separate Steuerungsvorrichtung ausgeführt ist, welche mit den weiteren Bestandteilen des Handhabungssystems 10 über ein drahtloses Kommunikationsverfahren kommuniziert. Die elektronische Steuerungsvorrichtung ist in Fig. 1 entsprechend nicht gezeigt. Die elektronische Steuerungsvorrichtung ist dazu eingerichtet, die weiteren Teile des Handhabungssystems 10, insbesondere die Fahrzeugbasis 18 zu steuern, wobei die Steuerung zumindest teilweise in Abhängigkeit von der detektierten optischen Umgebungsinformation erfolgt. Der Endeffektor 30 umfasst eine Blockstruktur 32, welche nachfolgend mit Bezug auf Fig. 3 weiter erläutert wird.

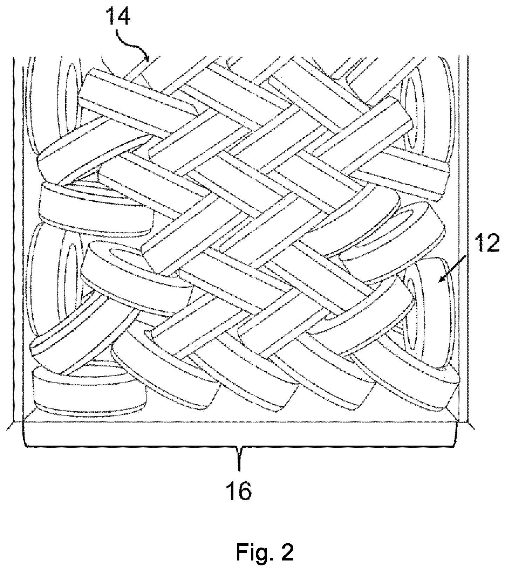

Eine besonders vorteilhafte Lageranordnung 14, welche sich aus einer Vielzahl von Fahrzeugreifen 12 mittels dem erfindungsgemäßen Handhabungssystem 10 in einem Lagerbereich 16 erhalten lässt, ist schematisch in Fig. 2 gezeigt. In Abweichung von einer klassischen Rick-Rack-Anordnung umfasst die Lageranordnung 14 auch vertikal angeordnete Fahrzeugreifen 12, was vorteilhafterweise dank der Ausgestaltung des Endeffektors 30, insbesondere dessen geringer Bauhöhe, realisierbar ist.

Fig. 3 zeigt eine schematische Visualisierung eines vereinfacht dargestellten Endeffektors 30, wie er in einem Handhabungssystem 10 in der Fig. 1 verwendet werden kann. Die Fig. 3a) und 3b) zeigen den Endeffektor 30 beziehungsweise dessen Blockstruktur 32 dabei in zwei unterschiedlichen Zuständen, in denen die Blockelemente 34a, 34b, 34c so angeordnet sind, dass sich für die kleinsten theoretischen Kreise, durch die die Blockstruktur 32 noch hindurchgeführt werden kann, unterschiedliche Werte ergeben. In der Fig. 3a) sind die drei Blockelemente 34a, 34b, 34c in einer C3-Rotationssymmetrie angeordnet und mit einer rahmenförmigen Grundstruktur 38 verbunden, in der diese in einem als Löseanordnung bezeichneten ersten Zustand teilweise versenkt vorliegen, was in der seitlichen Ansicht der Blockstruktur 32 (rechts) gut ersichtlich ist.

Fig. 3b) zeigt im Gegensatz hierzu die Fixieranordnung der Blockstruktur, in der die Blockelemente 34a, 34b, 34c relativ zur Grundstruktur 38 nach unten ausgeklappt werden, um einen darunter angeordneten Fahrzeugreifen 12 unterhalb des Wulstbereiches aufzunehmen, wobei die derart expandierten Blockelemente 34a, 34b, 34c nach der Expansion verhindern, dass die Blockstruktur 32 wieder durch die Zentralausnehmung aus dem Fahrzeugreifen 12 entfernt werden kann, wobei es zumindest teilweise zu einer kraftschlüssigen Verbindung kommt.

Das erfindungsgemäße Verfahren unter Einsatz des bevorzugten Handhabungssystems 10 kann so geführt werden, dass, beispielsweise mit der elektronischen Steuerungsvorrichtung, für eine Vielzahl an Kombinationen von Reifenarten und angestrebten Lageranordnungen 14 optimale Anordnungen vorberechnet und beispielsweise auf einer Speichereinheit gespeichert werden. Die im Verfahren eingesetzten Arbeitskräfte können den gewünschten Beladeauftrag beispielsweise über ein Display auswählen, wobei beispielsweise die Art der Fahrzeugreifen 12 als Eingabe verwendet werden kann.

Die mit der Fahrzeugbasis 18 verbundenen Teile des Handhabungssystems 10 können beispielsweise an einer Grundposition nahe der Laderampe positioniert werden, beispielsweise unmittelbar vor dem zu beladenden Anhänger. Für die Bereitstellung der Fahrzeugreifen 12 kann die Fördereinrichtung 24, welche beispielsweise als angetriebenes Teleskopförderband ausgeführt sein kann, mit den weiteren Bestandteilen des Handhabungssystems 10 verbunden werden. Nach Auswahl des Beladeauftrages und dem Start des Verfahrens erfasst das Handhabungssystem 10 mittels der optischen Detektionseinheit eine optische Umgebungsinformation, aus der die Position der Fahrzeugbasis 18 beziehungsweise deren relative Position zum zu beladenden Anhänger abgeleitet werden kann. Diese Erfassung der optischen Umgebungsinformation kann beispielsweise durch den Einsatz von Reflexionsfolien und/oder anderen Leitmarkierungen vor dem Anhänger befördert werden. Die Fahrzeugbasis 18 richtet sich auf den geöffneten Anhänger aus und fährt vollständig in den Anhänger ein, wobei die Fördereinrichtung 24 hinterhergezogen wird.

Mithilfe der optischen Detektionseinheit, insbesondere des LIDAR-Sensors wird eine gegebenenfalls im Anhänger bereits vorliegende Lageranordnung 14 erfasst. Mittels der elektronischen Steuervorrichtung kann ausgehend von dieser Eingabe ein optimaler Bewegungspfad für den Industrieroboter berechnet und dessen Steuerung zugrunde gelegt werden. Die zu platzierenden Fahrzeugreifen 12 fahren über das Teleskopförderband auf die angetriebenen Förderrollen der Positioniereinrichtung 20. Nach dem letzten angetriebenen Teil der Positionierungseinrichtung 20 werden die Fahrzeugreifen 12 über eine schräge Ebene mithilfe der Schwerkraft in den Aufnahmebereich 22 verbracht und dort zentriert. Die Aufnahme des Fahrzeugreifens 12 durch den Endeffektor 30 erfolgt unter Einsatz der Blockstruktur 32, indem die Blockelemente 34a, 34b, 34c unter die Reifenwulst in das Innere des Fahrzeugreifens 12 expandiert werden. Wenn alle möglichen Fahrzeugreifen 12 an einer vorgegebenen Position der Fahrzeugbasis 18 platziert wurden, wird diese für die nächsten Fahrzeugreifen 12 in der aktiven Reihe neu positioniert oder zur Position für die nächste Reihe von Fahrzeugreifen 12 gefahren, woraufhin die weiteren Schritte des Verfahrens wiederholt werden.

### Bezugszeichenliste

- 10: Handhabungssystem
- 12: Fahrzeugreifen
- 14: Lageranordnung
- 16: Lagerbereich
- 18: Fahrzeugbasis
- 20: Positioniereinrichtung
- 22: Aufnahmebereich
- 24: Fördereinrichtung
- 26: Überführungseinrichtung
- 28: Bewegungseinheit
- 30: Endeffektor
- 32: Blockstruktur
- 34a-c: Blockelemente
- 36: Freiförderabschnitt
- 38: Grundstruktur

## Patentansprüche

1. Handhabungssystem (10) für die automatisierte Anordnung von Fahrzeugreifen (12) zu einer Lageranordnung (14), umfassend eine Vielzahl an Fahrzeugreifen (12), insbesondere innerhalb eines Lagerbereichs (16), umfassend:
i) eine Fahrzeugbasis (18) mit einem Antrieb und einem Fahrwerk,
ii) eine mit der Fahrzeugbasis (12) verbundene Überführungseinrichtung (26) zur Aufnahme eines Fahrzeugreifens (12) aus dem Aufnahmebereich (22) des Handhabungssystems (10) und zur Anordnung des aufgenommenen Fahrzeugreifens (12) in eine Lageranordnung (14), wobei die Überführungseinrichtung (26) eine automatisierte Bewegungseinheit (28) und einen an der automatisierten Bewegungseinheit (28) angeordneten Endeffektor (30) zur Aufnahme von Fahrzeugreifen (12) umfasst,
iii) eine elektronische optische Detektionseinheit zur Detektion einer optischen Umgebungsinformation, und
iv) eine elektronische Steuerungsvorrichtung zur Steuerung des Handhabungssystems (10), wobei die elektronische Steuerungsvorrichtung dazu eingerichtet ist, die Fahrzeugbasis (18) zumindest teilweise in Abhängigkeit von der detektierten optischen Umgebungsinformation zu bewegen, **dadurch gekennzeichnet, dass** das Handhabungssystem weiter umfasst:
v) eine mit der Fahrzeugbasis (18) verbundene Positioniereinrichtung (20) zur Positionierung eines Fahrzeugreifens (12) in einem Aufnahmebereich (22) des Handhabungssystems (10),
vi) eine mit der Fahrzeugbasis (18) verbundene Fördereinrichtung (24) zur Förderung eines Fahrzeugreifens (12) und Übergabe des Fahrzeugreifens (12) an die Positioniereinrichtung (20), und dass
vii) der Endeffektor (30) eine Blockstruktur (32) mit drei oder mehr beweglichen Blockelementen (34a-c) umfasst, welche reversibel und zerstörungsfrei derart veränderbar ist, dass für die Blockstruktur (32) in unterschiedlichen Zuständen unterschiedliche Werte von A_{Block} erhalten werden, wobei A_{Block} die Fläche des kleinsten theoretischen Kreises ist, durch den die Blockstruktur (32) mit einer axialen translatorischen Verschiebung noch vollständig hindurchgeführt werden kann.

2. Handhabungssystem (10) nach Anspruch 1, wobei die Fahrzeugbasis (18) zumindest einen Servomotor umfasst.

3. Handhabungssystem (10) nach einem der Ansprüche 1 oder 2, wobei das Fahrwerk der Fahrzeugbasis (18) dazu eingerichtet ist, dass die Fahrzeugbasis (18) einen Wendekreis von 30 cm oder weniger aufweist, und/oder wobei das Fahrwerk der Fahrzeugbasis (18) dazu eingerichtet ist, dass die Fahrzeugbasis (18) entweder entlang der Längsachse oder entlang der orthogonal zur Längsachse stehenden Querachse bewegt werden kann, ohne dass sich die Ausrichtung der Längsachse um 5° oder mehr ändert.

4. Handhabungssystem (10) nach einem der Ansprüche 1 bis 3, wobei die Positioniereinrichtung (20) einen in Richtung des Aufnahmebereichs (22) abschüssigen Freiförderabschnitt (36) umfasst, wobei der Freiförderabschnitt (36) eine Vielzahl von frei rotierbar gelagerten Rollenelementen umfasst, wobei der Freiförderabschnitt (36) dazu eingerichtet ist, einen Fahrzeugreifen (12) zumindest teilweise durch Einwirkung der Schwerkraft in Richtung des Aufnahmebereichs (22) zu führen.

5. Handhabungssystem (10) nach einem der Ansprüche 1 bis 4, wobei der Endeffektor (30) eine Grundstruktur (38) umfasst, wobei die Blockstruktur (32) an der Grundstruktur (38) angeordnet ist.

6. Handhabungssystem (10) nach Anspruch 5, wobei der Endeffektor (30) dazu eingerichtet ist, dass die Grundstruktur (38) in einer Löseanordnung einen aufzunehmenden Fahrzeugreifen (12) aus der axialen Richtung kontaktieren kann, ohne dass die Blockstruktur (32) den Fahrzeugreifen (12) kontaktiert.

7. Handhabungssystem (10) nach einem der Ansprüche 5 oder 6, wobei der Endeffektor (30) dazu eingerichtet ist, zu einem aufzunehmenden Fahrzeugreifen (12) mit der Blockstruktur (32) an drei oder mehr über den Umfang des Fahrzeugreifens (12) verteilten Kontaktpunkten eine kraftschlüssige Verbindung auszubilden.

8. Verfahren zur Anordnung von Fahrzeugreifen (12) zu einer Lageranordnung (14) in einem Lagerbereich (16) mit einem Handhabungssystem (10) nach einem der Ansprüche 1 bis 7, umfassend die Verfahrensschritte:
a) Bewegen der Fahrzeugbasis (18) in eine Positionierungsposition, wobei das Bewegen zumindest teilweise in Abhängigkeit von der von der optischen Detektionseinheit detektierten optischen Umgebungsinformation erfolgt,
b) Fördern eines Fahrzeugreifens (12) mit der Fördereinrichtung (24) und Übergabe des geförderten Fahrzeugreifens (12) an die Positioniereinrichtung (20),
c) positionieren des geförderten Fahrzeugreifens (12) im Aufnahmebereich (22) des Handhabungssystems (10) mit der Positioniereinrichtung (20),
d) Aufnahme des Fahrzeugreifens (12) aus dem Aufnahmebereich (22) des Handhabungssystems (10) mit dem Endeffektor (30) der Überführungseinrichtung (26) unter Ausbildung einer reversibel und zerstörungsfrei lösbaren Verbindung, und
e) Anordnen des aufgenommenen Fahrzeugreifens (12) in einen Lagerbereich (16) und Auflösen der Verbindung zwischen dem Endeffektor (30) und dem Fahrzeugreifen (12),
wobei zumindest die Verfahrensschritte b), c), d) und e) mehrfach wiederholt werden, um im Lagerbereich (16) eine Lageranordnung (14) zu erzeugen.

9. Verfahren nach Anspruch 8, wobei die Lageranordnung (14) eine Rick-Rack-Anordnung umfasst, bei der jeder Fahrzeugreifen (12) in die Zentralausnehmung zumindest eines anderen Fahrzeugreifens der Lageranordnung (14) hineinragt.

10. Verfahren nach Anspruch 9, wobei die Lageranordnung (14) eine Rick-Rack-Anordnung mit zumindest einem vertikal angeordneten Fahrzeugreifen (12) umfasst, dessen Rotationsachse mit der Horizontalen einen Winkel von 5° oder weniger einschließt.

## Claims

1. Handling system (10) for automated arrangement of vehicle tyres (12) into a storage arrangement (14), comprising a multiplicity of vehicle tyres (12), in particular within a storage area (16), comprising:
i) a base vehicle (18) having a drive and having a chassis,
ii) a transfer device (26) which is connected to the base vehicle (12) and serves for receiving a vehicle tyre (12) from the receiving region (22) of the handling system (10) and for arranging the received vehicle tyre (12) in a storage arrangement (14), wherein the transfer device (26) comprises an automated movement unit (28) and an end effector (30) for receiving vehicle tyres (12) that is arranged on the automated movement unit (28),
iii) an electronic optical detection unit for detecting optical surroundings information, and
iv) an electronic control device for controlling the handling system (10), wherein the electronic control device is configured to move the base vehicle (18) at least partially according to the detected optical surroundings information, **characterized in that** the handling system further comprises:
v) a positioning device (20) which is connected to the base vehicle (18) and serves for positioning a vehicle tyre (12) in a receiving region (22) of the handling system (10),
vi) a conveyor (24) which is connected to the base vehicle (18) and serves for conveying a vehicle tyre (12) and for transferring the vehicle tyre (12) to the positioning device (20), and **in that**
vii) the end effector (30) comprises a block structure (32) which has three or more movable block elements (34a-c) and which is able to be varied in a reversible and non-destructive manner in such a way that different values of A_{block}, where A_{block} is the area of the smallest theoretical circle through which the block structure (32) can still be completely passed by way of an axial translational displacement, are obtained for the block structure (32) in different states.

2. Handling system (10) according to Claim 1, wherein the base vehicle (18) comprises at least one servo motor.

3. Handling system (10) according to either of Claims 1 and 2, wherein the chassis of the base vehicle (18) is configured such that the base vehicle (18) has a turning circle of 30 cm or less, and/or wherein the chassis of the base vehicle (18) is configured such that the base vehicle (18) can be moved either along the longitudinal axis or along the transverse axis orthogonal to the longitudinal axis without the orientation of the longitudinal axis being changed by 5° or more.

4. Handling system (10) according to one of Claims 1 to 3, wherein the positioning device (20) comprises a free-conveyance section (36) that slopes downwards in the direction of the receiving region (22), wherein the free-conveyance section (36) comprises a multiplicity of freely rotatably mounted roller elements, wherein the free-conveyance section (36) is configured to guide a vehicle tyre (12) in the direction of the receiving region (22) at least partially by the action of gravitational force.

5. Handling system (10) according to one of Claims 1 to 4, wherein the end effector (30) comprises a basic structure (38), wherein the block structure (32) is arranged on the basic structure (38).

6. Handling system (10) according to Claim 5, wherein the end effector (30) is configured such that, in a release arrangement, the basic structure (38) can make contact from the axial direction with a vehicle tyre (12) to be received without the block structure (32) making contacting with the vehicle tyre (12).

7. Handling system (10) according to either of Claims 5 and 6, wherein the end effector (30) is configured to form, with respect to a vehicle tyre (12) to be received, a force-fitting connection at three or more contact points distributed over the circumference of the vehicle tyre (12) by way of the block structure (32).

8. Method for arranging vehicle tyres (12) into a storage arrangement (14) in a storage area (16) using a handling system (10) according to one of Claims 1 to 7, comprising the method steps of:
a) moving the base vehicle (18) into a positioning position, wherein the movement is realized at least partially according to the optical surroundings information detected by the optical detection unit,
b) conveying a vehicle tyre (12) by way of the conveyor (24) and transferring the conveyed vehicle tyre (12) to the positioning device (20),
c) positioning the conveyed vehicle tyre (12) in the receiving region (22) of the handling system (10) by way of the positioning device (20),
d) receiving the vehicle tyre (12) from the receiving region (22) of the handling system (10) by way of the end effector (30) of the transfer device (26) so as to form a reversibly and non-destructively releasable connection, and
e) arranging the received vehicle tyre (12) in a storage area (16) and releasing the connection between the end effector (30) and the vehicle tyre (12),
wherein at least the method steps b), c), d) and e) are repeated multiple times in order to produce a storage arrangement (14) in the storage area (16).

9. Method according to Claim 8, wherein the storage arrangement (14) comprises a rickrack arrangement in which each vehicle tyre (12) projects into the central clearance of at least one other vehicle tyre of the storage arrangement (14).

10. Method according to Claim 9, wherein the storage arrangement (14) comprises a rickrack arrangement with at least one vertically arranged vehicle tyre (12) whose axis of rotation includes an angle of 5° or less with the horizontal.

## Revendications

1. Système de manutention (10) pour l'agencement automatisé de pneumatiques (12) de véhicule en un agencement de stockage (14), comprenant une multitude de pneumatiques (12) de véhicule, en particulier au sein d'une zone de stockage (16), comprenant :
i) une base (18) de véhicule présentant un moteur et un châssis,
ii) un dispositif de transfert (26) relié à la base (12) de véhicule, destiné à recevoir un pneumatique (12) de véhicule provenant de la zone de réception (22) du système de manutention (10) et à agencer le pneumatique (12) de véhicule reçu dans un agencement de stockage (14), le dispositif de transfert (26) comprenant une unité de déplacement (28) automatisée et un effecteur final (30) agencé sur l'unité de déplacement (28) automatisée et destiné à recevoir le pneumatique (12) de véhicule,
iii) une unité électronique de détection optique destinée à détecter une information optique d'environnement ; et
iv) un dispositif de commande électronique destiné à commander le système de manutention (10), le dispositif de commande électronique étant conçu pour déplacer la base (18) de véhicule au moins partiellement en fonction de l'information optique d'environnement détectée, **caractérisé en ce que** le système de manutention comprend en outre :
v) un dispositif de positionnement (20), relié à la base (18) de véhicule, destiné à positionner un pneumatique (12) de véhicule dans une zone de réception (22) du système de manutention (10) ;
vi) un dispositif de transport (24), relié à la base (18) de véhicule, destiné à transporter un pneumatique (12) de véhicule et à transférer le pneumatique (12) de véhicule au dispositif de positionnement (20), et **en ce que**
vii) l'effecteur final (30) comprend une structure (32) à blocs comprenant trois éléments de bloc (34a-c) mobiles ou plus, qui peut être modifié de manière réversible et non destructive de telle sorte que pour la structure (32) à blocs, différentes valeurs de A_{bloc} sont obtenues dans des états différents, A_{bloc} représentant la surface du plus petit cercle théorique à travers lequel la structure (32) à blocs peut encore passer complètement par un glissement à translation axiale.

2. Système de manutention (10) selon la revendication 1, la base (18) de véhicule comprenant au moins un servomoteur.

3. Système de manutention (10) selon l'une des revendications 1 ou 2, le châssis de la base (18) de véhicule étant conçu de telle sorte que la base (18) de véhicule présente un rayon de braquage inférieur ou égal à 30 cm et/ou le châssis de la base (18) de véhicule étant conçu de telle sorte que la base (18) de véhicule peut se déplacer soit le long de l'axe longitudinal, soit le long de l'axe transversal orthogonal par rapport à l'axe longitudinal, sans que l'orientation de l'axe longitudinal ne soit modifiée de 5° ou plus.

4. Système de manutention (10) selon l'une des revendications 1 à 3, le dispositif de positionnement (20) comprenant une section de transport libre (36) en pente en direction de la zone de réception (22), la section de transport libre (36) comprenant une multitude d'éléments à rouleaux disposés librement en rotation, la section de transport libre (36) étant conçue pour guider un pneumatique (12) de véhicule en direction de la zone de réception (22), au moins en partie par l'action de la gravité.

5. Système de manutention (10) selon l'une des revendications 1 à 4, l'effecteur final (30) comprenant une structure de base (38), la structure (32) à blocs étant agencée sur la structure de base (38).

6. Système de manutention (10) selon la revendication 5, l'effecteur final (30) étant conçu pour permettre un contact de la structure de base (38), dans un agencement de détachement, avec un pneumatique (12) de véhicule à recevoir provenant de la direction axiale, sans que la structure (32) à blocs n'entre en contact avec le pneumatique (12) de véhicule.

7. Système de manutention (10) selon l'une des revendications 5 ou 6, l'effecteur final (30) étant conçu pour former une liaison par force, par rapport à un pneumatique (12) de véhicule à recevoir, avec la structure (32) à blocs sur trois points de contact ou plus répartis sur la périphérie du pneumatique (12) de véhicule.

8. Procédé d'agencement de pneumatiques (12) de véhicule en un agencement de stockage (14) dans une zone de stockage (16) à l'aide d'un système de manutention (10) selon l'une des revendications 1 à 7, comprenant les étapes de procédé :
a) déplacement de la base (18) de véhicule dans une position de positionnement, le déplacement ayant lieu au moins partiellement en fonction de l'information optique d'environnement détectée par l'unité de détection optique,
b) transport d'un pneumatique (12) de véhicule à l'aide du dispositif de transport (24) et transfert du pneumatique (12) de véhicule au dispositif de positionnement (20),
c) positionnement du pneumatique (12) de véhicule transporté dans la zone de réception (22) du système de manutention (10) à l'aide du dispositif de positionnement (20),
d) réception du pneumatique (12) de véhicule provenant de la zone de réception (22) du système de manutention (10) à l'aide de l'effecteur final (30) du dispositif de transfert (26), avec la formation d'une liaison détachable de manière réversible et non destructive, et
e) agencement du pneumatique (12) de véhicule reçu dans une zone de stockage (16) et détachement de la liaison entre l'effecteur final (30) et le pneumatique (12) de véhicule,
au moins les étapes de procédé b), c), d) et e) étant répétées plusieurs fois afin de générer un agencement de stockage (14) dans la zone de stockage (16).

9. Procédé selon la revendication 8, l'agencement de stockage (14) comprenant un agencement en zigzag dans lequel chaque pneumatique de véhicule (12) pénètre dans l'évidement central d'au moins un autre pneumatique de véhicule de l'agencement de stockage (14).

10. Procédé selon la revendication 9, l'agencement de stockage (14) comprenant un agencement en zigzag présentant au moins un pneumatique (12) de véhicule agencé verticalement, dont l'axe de rotation forme, avec l'horizontale, un angle inférieur ou égal à 5°.
